# EUROPEAN PATENT SPECIFICATION

(11) **EP 3 465 444 B1**
(45) Date of publication and mention of the grant of the patent: **19.01.2022**
(21) Application number: 17722955.6
(22) Date of filing: 27.04.2017
(51) Int. Cl.: G06F 12/02, G06F 3/06, G06F 9/50

(54) **DATA ACCESS BETWEEN COMPUTING NODES**
DATENZUGRIFF ZWISCHEN RECHENKNOTEN
ACCÈS À DES DONNÉES ENTRE DES NOEUDS DE CALCUL

(30) Priority: 27.05.2016 US 201615167953
(43) Date of publication of application: 10.04.2019
(73) Proprietor: Intel Corporation, Santa Clara, CA 95054 (US)
(72) Inventor: GUIM BERNAT, Francesc, 08036 Barcelona (ES); DURAN GONZALEZ, Alejandro, 08950 Barcelona (ES); KUMAR, Karthik, Chandler, Arizona 85249 (US); WILLHALM, Thomas, 69207 Sandhausen (DE); RAMANUJAN, Raj K., Federal Way, Washington 98023 (US)
(74) Representative: Rummler, Felix
(86) International application number: PCT/US2017/029954
(87) International publication number: WO 2017/204990

(56) References cited:
- US-A1- 2009 313 445
- US-A1- 2014 108 751
- US-A1- 2014 365 738

## Description

### BACKGROUND

Data centers are facilities that house a plurality of computing nodes. For example, a typical data center can include hundreds or thousands of computing nodes. The computing nodes can include processing capabilities to perform computing and memory for data storage. Data centers can include network switches and/or routers to enable communication between different computing nodes in the data center. Data centers can employ redundant or backup power supplies, redundant data communications connections, environmental controls (e.g., air conditioning, fire suppression) and various security devices. Data centers can employ various types of memory, such as volatile memory or non -volatile memory. Non-limiting examples of volatile-memory include dynamic random access memory (DRAM) and synchronous dynamic random access memory (SDRAM). Non-limiting examples of non-volatile memory include flash memory and solid-state storage.

US 2014/365738 A1 describes a method for memory page offloading in a multiprocessor computer system, the method comprising: detecting, by a computer system, a memory pressure condition on a first node; invalidating a page table entry for a memory page residing on the first node; copying the memory page to a second node; and updating the page table entry for the memory page to reference the second node.

US 2014/108751 A1 describes a method for processing a copy command indicating a source set comprising a subset of source logical addresses to copy to an indicated target set comprising a subset of target logical addresses.

### SUMMARY OF INVENTION

The present invention is defined in the independent claims. Preferred features are recited in the dependent claims

### BRIEF DESCRIPTION OF THE DRAWINGS

Features and advantages of embodiments will be apparent from the detailed description which follows, taken in conjunction with the accompanying drawings, which together illustrate, by way of example, embodiment features; and, wherein:
FIG. 1 illustrates a non-uniform memory access (NUMA) data storage center in accordance with an example embodiment;
FIG. 2 illustrates an address space in accordance with an example embodiment;
FIG. 3 illustrates a non-uniform memory access (NUMA) translation table in accordance with an example embodiment;
FIG. 4 illustrates a system for copying data between computing nodes in accordance with an example embodiment;
FIG. 5 illustrates functionality of an apparatus in accordance with an example embodiment;
FIG. 6 is a diagram of a computing node in accordance with an example embodiment;
FIG. 7 is a diagram of a non-uniform memory access (NUMA) data storage system in accordance with an example embodiment;
FIG. 8 depicts a flowchart of a method for copying data between computing nodes in accordance with an example embodiment; and
FIG. 9 illustrates a computing system that includes a data storage device in accordance with an example embodiment.

Reference will now be made to the exemplary embodiments illustrated.

### DESCRIPTION OF EMBODIMENTS

Before the disclosed embodiments are described, it is to be understood that this disclosure is not limited to the particular structures, process steps, or materials disclosed herein, but is extended to equivalents thereof as would be recognized by those ordinarily skilled in the relevant arts. It should also be understood that terminology employed herein is used for the purpose of describing particular examples or embodiments only and is not intended to be limiting. The same reference numerals in different drawings represent the same element. Numbers provided in flow charts and processes are provided for clarity in illustrating steps and operations and do not necessarily indicate a particular order or sequence.

Furthermore, the described features, structures, or characteristics can be combined in any suitable manner in one or more embodiments. In the following description, numerous specific details are provided, such as examples of layouts, distances, network examples, etc., to provide a thorough understanding of various embodiments. One skilled in the relevant art will recognize, however, that such detailed embodiments do not limit the overall concepts articulated herein, but are merely representative thereof.

As used in this specification and the appended claims, the singular forms "a," "an" and "the" include plural referents unless the context clearly dictates otherwise. Thus, for example, reference to "a bit line" includes a plurality of such bit lines.

Reference throughout this specification to "an example" means that a particular feature, structure, or characteristic described in connection with the example is included in at least one embodiment. Thus, appearances of the phrases "in an example" or "an embodiment" in various places throughout this specification are not necessarily ail referring to the same embodiment.

As used herein, a plurality of items, structural elements, compositional elements, and/or materials can be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and examples can be referred to herein along with alternatives for the various components thereof. It is understood that such embodiments, examples, and alternatives are not to be construed as de facto equivalents of one another, but are to be considered as separate and autonomous representations under the present disclosure.

Furthermore, the described features, structures, or characteristics can be combined in any suitable manner in one or more embodiments. In the following description, numerous specific details are provided, such as examples of layouts, distances, network examples, etc., to provide a thorough understanding of various embodiments. One skilled in the relevant art will recognize, however, that the technology can be practiced without one or more of the specific details, or with other methods, components, layouts, etc. In other instances, well-known structures, materials, or operations may not be shown or described in detail to avoid obscuring aspects of the disclosure.

In this disclosure, "comprises," "comprising," "containing" and "having" and the like can have the meaning ascribed to them in U.S. Patent law and can mean "includes," "including," and the like, and are generally interpreted to be open ended terms. The terms "consisting of" or "consists of" are closed terms, and include only the components, structures, steps, or the like specifically listed in conjunction with such terms, as well as that which is in accordance with U.S. Patent law. "Consisting essentially of" or "consists essentially of" have the meaning generally ascribed to them by U.S. Patent law. In particular, such terms are generally closed terms, with the exception of allowing inclusion of additional items, materials, components, steps, or elements, that do not materially affect the basic and novel characteristics or function of the item(s) used in connection therewith. For example, trace elements present in a composition, but not affecting the compositions nature or characteristics would be permissible if present under the "consisting essentially of" language, even though not expressly recited in a list of items following such terminology. When using an open ended term in this specification, like "comprising" or "including," it is understood that direct support should be afforded also to "consisting essentially of" language as well as "consisting of" language as if stated explicitly and vice versa.

The terms "first," "second," "third," "fourth," and the like in the description and in the claims, if any, are used for distinguishing between similar elements and not necessarily for describing a particular sequential or chronological order. It is to be understood that any terms so used are interchangeable under appropriate circumstances such that the embodiments described herein are, for example, capable of operation in sequences other than those illustrated or otherwise described herein. Similarly, if a method is described herein as comprising a series of steps, the order of such steps as presented herein is not necessarily the only order in which such steps may be performed, and certain of the stated steps may possibly be omitted and/or certain other steps not described herein may possibly be added to the method.

As used herein, comparative terms such as "increased," "decreased," "better," "worse," "higher," "lower," "enhanced," and the like refer to a property of a device, component, or activity that is measurably different from other devices, components, or activities in a surrounding or adjacent area, in a single device or in multiple comparable devices, in a group or class, in multiple groups or classes, or as compared to the known state of the art. For example, a data region that has an "increased" risk of corruption can refer to a region of a memory device which is more likely to have write errors to it than other regions in the same memory device. A number of factors can cause such increased risk, including location, fabrication process, number of program pulses applied to the region, etc.

As used herein, the term "substantially" refers to the complete or nearly complete extent or degree of an action, characteristic, property, state, structure, item, or result. For example, an object that is "substantially" enclosed would mean that the object is either completely enclosed or nearly completely enclosed. The exact allowable degree of deviation from absolute completeness may in some cases depend on the specific context. However, generally speaking the nearness of completion will be so as to have the same overall result as if absolute and total completion were obtained. The use of "substantially" is equally applicable when used in a negative connotation to refer to the complete or near complete lack of an action, characteristic, property, state, structure, item, or result. For example, a composition that is "substantially free of particles would either completely lack particles, or so nearly completely lack particles that the effect would be the same as if it completely lacked particles. In other words, a composition that is "substantially free of" an ingredient or element may still actually contain such item as long as there is no measurable effect thereof.

As used herein, the term "about" is used to provide flexibility to a numerical range endpoint by providing that a given value may be "a little above" or "a little below" the endpoint. However, it is to be understood that even when the term "about" is used in the present specification in connection with a specific numerical value, that support for the exact numerical value recited apart from the "about" terminology is also provided.

Numerical amounts and data may be expressed or presented herein in a range format. It is to be understood that such a range format is used merely for convenience and brevity and thus should be interpreted flexibly to include not only the numerical values explicitly recited as the limits of the range, but also to include all the individual numerical values or sub-ranges encompassed within that range as if each numerical value and sub-range is explicitly recited. As an illustration, a numerical range of "about 1 to about 5" should be interpreted to include not only the explicitly recited values of about 1 to about 5, but also include individual values and sub-ranges within the indicated range. Thus, included in this numerical range are individual values such as 2, 3, and 4 and sub-ranges such as from 1-3, from 2-4, and from 3-5, etc., as well as 1, 1.5, 2, 2.3, 3, 3.8, 4, 4.6, 5, and 5.1 individually.

This same principle applies to ranges reciting only one numerical value as a minimum or a maximum. Furthermore, such an interpretation should apply regardless of the breadth of the range or the characteristics being described.

### Example Embodiments

An initial overview of technology embodiments is provided below and then specific technology embodiments are described in further detail later. Unless defined otherwise, all technical and scientific terms used herein have the same meaning as commonly understood by one of ordinary skill in the art to which this disclosure belongs.

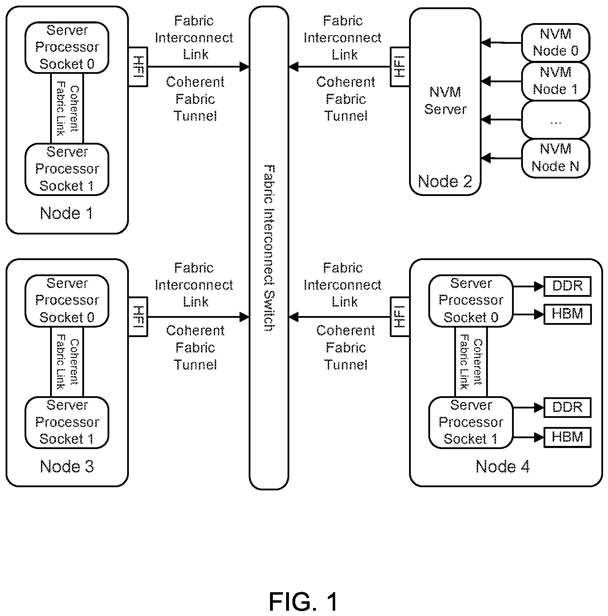

FIG. 1 illustrates an example of a non-uniform memory access (NUMA) data storage center. The data center can include a plurality of computing nodes. Each computing node can include one or more processors and memory. In accordance with a NUMA shared memory architecture, a processor in a first computing node can access local memory (i.e., memory in the first computing node). In addition, the processor can access memory that is located in a second computing node via an interconnect link between the two computing nodes. In NUMA, memory access time can vary depending on the location of the data to be accessed in relation to the processor that is accessing the data. For example, when the processor from the first computing node accesses data from, the local memory (i.e., memory in the first computing node), the access time can be relatively fast as compared to when the processor in the first computing node accesses data from the second computing node.

In one example, the data center can include multiple computing nodes. Each computing node can include a set of processors and one or more memory technologies. The memory can be shared memory, in that the memory can be accessible to any of the computing nodes in the data center. The multiple computing nodes can be connected within the data center via a fabric. The fabric (or switched fabric) is a network topology in which the multiple computing nodes are interconnected via one or more network switches. In a specific example, the multiple computing nodes can be connected through an Ethernet fabric. In the data center, applications can perform various operations on data residing on multiple computing nodes. In addition, the applications can execute instructions to move or copy data between the computing nodes. As a non-limiting example, a database application can execute instructions to join tables residing on different computing nodes. As another non-limiting example, a computing node can create replicas of data residing in memory on two different computing nodes for high-availability and disaster recovery reasons. In other examples, the data center can be used for high-performance computing (HPC) (e.g., financial, oil and gas, material sciences, weather simulation domains), enterprise applications (e.g., scale out databases), big data applications (e.g., NoSQL databases, in-memory replication), etc.

In one example, each computing node can include a storage device with volatile memory, non-volatile memory, or a combination thereof. Exemplary storage devices can include any combination of DRAM, SDRAM, hard disk drive (HDD), a solid-state drive (SSD), a redundant array of independent disks (RAID) volume, a non-volatile dual in-line memory module (NVDIMM), a network attached storage, phase change memory (PCM), flash memory, such as can include planar or multi-dimensional NAND memory and NOR memory, a three dimensional cross point (e.g., 3D XPoint) memory, write in place non-volatile MRAM (NVMRAM), and so forth.

As shown in FIG. 1, an exemplary data center can include a first computing node, a second computing node, a third computing node and a fourth computing node. The first and third computing nodes can each include a plurality of server processor sockets (e.g., server processor sockets 0 and 1). The server processor sockets can provide mechanical and electrical connections for server processors located within the computing nodes. The server processor sockets can be connected using coherent fabric links. The second computing node can be a remote memory server connected to a plurality of memory nodes. For example, the remote memory server can be a non-volatile memory (NVM) server and the plurality of memory nodes can be NVM nodes. The fourth computing node can include server processor sockets 0 and 1. Each server processor socket can connect to memory within the computing node, such as double data rate (DDR) compliant memory or high bandwidth memory (HBM) compliant memory. Therefore, the data center can include computing nodes with different types of memory technologies and at potentially different physical locations.

In one example, the fourth computing node can execute various applications, and the applications can have access to the DDR memory and HBM memory (located in the fourth computing node), as well as other memories from remote computing nodes (e.g., the NVM in the second computing node). The applications executed on the fourth computing node can move data or copy data across the remote computing nodes. Each of these memories can have different physical characteristics in terms of bandwidth and latency. In addition, the bandwidth and latency can depend on the physical locations for each of the memories. For example, the applications executed on the fourth computing node can have local access to the HBM (i.e., HBM in the fourth computing node) or access to HBM in remote computing nodes (e.g., HBM in the first and third computing nodes). However, in this example, the remote computing nodes can provide reduced HBM bandwidth as compared to the fourth computing node due to interconnect limitations.

In one example, memories can be accessed between the first, second, third and fourth computing nodes through a host fabric interface (HFI). The HFI can also be referred to as a network interface controller. Each computing node can include an HFI that communicates with an HFI of another computing node. For example, a first HFI of the first computing node can communicate with a second HFI of the second computing node via a fabric interconnect switch. The first HFI can be connected to the fabric interconnect switch over a first fabric interconnect link that creates a first coherent fabric tunnel. Similarly, the second HFI can be connected to the fabric interconnect switch over a second fabric interconnect link that creates a second coherent fabric tunnel.

In previous data center architecture solutions, additional layers of memory are interposed in the data center architecture. The additional tiers of memory can be configured as caches to mitigate differences in latency and bandwidth between the different types of memory in the data center. However, configuring a tier of memory to act as a cache for a memory layer can reduce an effective bandwidth or increase latency for the tier of memory, as compared to using the memory as a separate pool of memory. In other words, some of the benefits of the memory can be lost when the memory is configured as a cache, as opposed to using the memory is a typical manner (i.e., an uncached manner). As an example, configuring a tier of HBM compatible memory as a cache for DRAM can reduce the effective bandwidth and increase latency for the HBM compatible memory. As another example, DRAM can act as a cache for non-volatile memory, but the full value of the non-volatile memory may be achieved if the DRAM and the non-volatile memory are configured as separate pools of memory.

In some prior solutions, the data center architecture can manage data transfers between memory layers of computing nodes without a cache. The data center architecture can track which data is to be transferred at a later time and which data is not to be transferred, and therefore, does not use the cache to temporarily store data. In this solution, it is desirable for these data transfers to occur concurrently with processor computing (e.g., similar to the manner in which prefetching and eviction from hardware caches can occur concurrently with processor computations). However, in prior data center architecture solutions that do not employ caches, performing the data transfers can involve processor intervention on one or more computing nodes. As a result, the computing nodes can be prevented from performing other computing. Therefore, in prior solutions, a remote read or write operation cannot be initiated asynchronously with respect to the processors in the computing nodes. Asynchronous communication can be desirable since data transfers between computing nodes in the data center can be effectively overlapped with other computations performed at the computing nodes. In addition, asynchronous communication can reduce latencies and improve bandwidth.

In embodiments of the present technology, a non-uniform memory access (NUMA) data center can include a plurality of computing nodes with processors and memory. Within the data center, data can be transferred or copied between regions of memory within the same computing node or across computing nodes. The transfer or copy of the data can occur concurrently with other computations performed at the processors of the computing nodes. In other words, the transfer of data across different layers of memory on the computing nodes may not interfere with other processes executed on the computing nodes.

In embodiments of the present technology, the NUMA data center can employ direct memory access (DMA), in which memories across different computing nodes are accessible independently of the processors on the computing nodes. DMA can be supported between different NUMA domains (or levels). The different NUMA domains can correspond to different memory regions in the computing nodes of the NUMA data center. For example, data in a memory region associated with a specific NUMA domain can be copied to another memory region associated with another NUMA domain, and the data can be copied without involving the processors in either the two computing nodes associated with the memory regions. As explained in further detail below, to enable DMA data copies between computing nodes in a NUMA data center, system address decoder schemes can be extended to map physical memory regions to different NUMA domains. In other words, each NUMA domain can belong to memory hosted by a given computing node. Second, host fabric interface (HFI) architecture or network interface controller architecture can be extended to enable the transfer of data across different computing nodes. Third, the data can be copied based on commands that specify a first memory region with a starting address plus offset, as well as a second memory region with a starting address plus offset. In other words, the commands can specify the data to be copied across memory regions of the computing nodes.

In one example, the NUMA data center can be composed of one or more coherent domains, and the coherent domains can be connected through a fabric interconnect. For example, the NUMA data center can include a defined number of servers that communication with each other via the fabric. The fabric can include a fabric interconnect switch, which can allow each coherent domain to expose memory address regions to other coherent domains. In addition, processors that are connected through a coherent fabric link can belong to the same coherent domain (e.g., server).

In one configuration, the NUMA data center can include various devices that assist in copying data across computing nodes. In one example, caching agents (CA) are coherency agents within a computing node that process memory requests from the processors (or cores) within that same computing node. The processors can use a super queue (SQ) structure to store on die interconnect requests that are sent to the CA. In another example, home agents (HA) are computing node clusters that process memory requests from the caching agents (CA). The home agents can act as a home for a portion of a memory address space. One die can have multiple homes with a distributed memory address space mapping. Moreover, depending on the memory addressing space that the memory requests are targeting, the memory requests can be provided to a same computing node's local memory. Alternatively, the memory requests can be provided to a coherent fabric agent for routing the memory requests to other processors within a same coherent domain. In yet another alternative, the memory requests can be provided to processors through a host fabric interface (HFI) that are outside the coherent domain.

In one example, memory in the computing nodes can operate in at least two modes - flat mode or memory side cache mode. Flat memory can act as a memory storage device. Memory side cache memory can act as a cache for flat memories that reside in further domains. In one example, a memory controller providing access to memory side cache memory can implement both cache and memory access logic. In addition, the memory controller can act as an interface for the physical memories in the computing nodes.

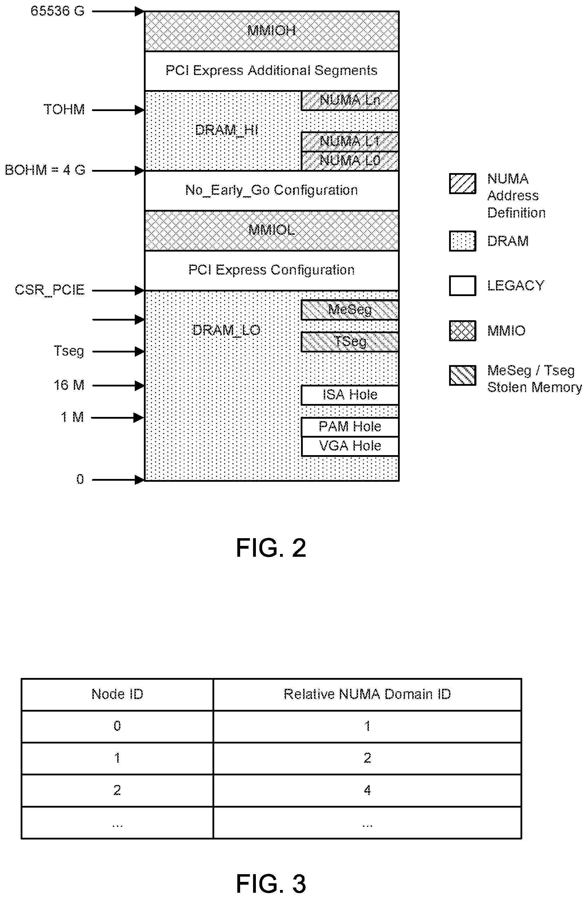

FIG. 2 illustrates an example of an address space, such as a DRAM address space. NUMA domains (or levels) can be applied to the DRAM address space, and the NUMA domains can correspond to memory regions of a computing node. In other words, physical memory regions of computing nodes can be mapped to different NUMA domains. Therefore, NUMA domain can belong to memory hosted by a given computing node.

In one example, a system address decoder can be extended to provide the NUMA domains. The system address decoder can be part of a caching agent (CA) that runs on each computing node. The system address decoders in the different computing nodes can be configured consistently to ensure that the memory address space is consistently viewed by the different computing nodes. In one example, the system address decoder can be configured using precompiled code (p-code) flows. The p-code flows can configure the NUMA domains, as well as target nodes, address ranges and other decoder fields. The NUMA domain can be an integer value that goes from 0 to N, wherein 0 represents a closest NUMA domain (less latency) and N represents a furthest NUMA domain (higher latency). Therefore, the NUMA domain is not a static value, but rather is relative to a particular system address decoder. Since the NUMA domain fields are available in all of the system address decoders, the NUMA domain fields can be used in various types of memory ranges, such as memory mapped input/output (MMIO).

In one example, at a given system address decoder, an address space can be mapped to local physical memory. For example, a DRAM address space can be mapped to local DRAM memory. In addition, the address space can be mapped to physical memory hosted in remote computing nodes. Each of the physical memories can be referred to as NUMA domain X, wherein X is an integer. As an example, a NUMA data center can have three computing nodes. Therefore, at a system address decoder at a first computing node, the address space can be mapped to local physical memory (i.e., physical memory associated with the first computing node), as well as two NUMA memory domains that belong to the physical memory exposed by the second and third computing nodes.

In embodiments of the present technology, a host fabric interface (HFI) or network interface controller can reside in a given computing node. The HFI is an entity in each computing node that can communicate with HFIs in other computing nodes in the NUMA data center. In other words, the computing nodes in the NUMA data center can communicate with each other via the HFIs. In one example, the HFI can receive commands that specify data to be copied across memory regions. The HFI can receive the command from a processor (or core) in the computing node. For example, a command can include a definition of a first memory region. The first memory region can be defined by a first address (@a) and an offset value. In other words, the first memory region can be defined by [@a, @a+offset]. The offset value can determine a size of the first memory region. In addition, the command can include a definition of a second memory region, which can be defined by a second address (@b) and the offset value. In other words, the second memory region can be defined by [@b, @b+offset]. The command received at the HFI from the processor can point to a location in local memory in which the first address @a, the second address @b and the offset are specified. The command can include instructions to copy data from the first memory region [@a, @a+offset] to the second memory region [@b, @b+offset]. The first and second memory regions can be on the same computing node or across different computing nodes in a NUMA data center.

In one configuration, the HFI can discover NUMA domain IDs corresponding to the first address @a and the second address @b. More specifically, the HFI can exchange messages with the system address decoder in order to discover the NUMA domain IDs corresponding to the first address @a and the second address @b. As an example, the system address decoder can notify the HFI that the first address region [@a, @a+offset] belongs to a NUMA domain ID associated with local memory, but the second address region [@b, @b+offset] belongs to a NUMA domain ID associated with memory in a remote computing node.

In one example, the HFI can use the NUMA domain IDs to discover corresponding computing nodes (further explained in FIG. 3). For example, based on the NUMA domain IDs, the HFI can identify a source computing node that contains the first memory region [@a, @a+offset], as well as a target computing node that contains the second memory region [@b, @b+offset]. Based on this information, as described in further detail below, the HFI can initiate the copying of data from the first memory region [@a, @a+offset] in the source computing node to the second memory region [@b, @b+offset] in the target computing node.

FIG. 3 illustrates an example of a non-uniform memory access (NUMA) translation table. The translation table can map computing nodes in a NUMA data center to a corresponding NUMA domain ID. The translation table can be used to discover a specific computing node in which to copy or synchronize data. The translation table can be stored in a host fabric interface (HFI) or network interface controller in each computing node in the NUMA data center. The translation table can be configured at the HFI using precompiled code (p-code). In addition, the translation table can be indexed with the NUMA domain ID provided by the system address decoder.

As a non-limiting example, a NUMA domain ID of 1 can correspond to a computing node ID of 0, a NUMA domain ID of 2 can correspond to a computing node ID of 1, and a NUMA domain ID of 4 can correspond to a computing node ID of 2.

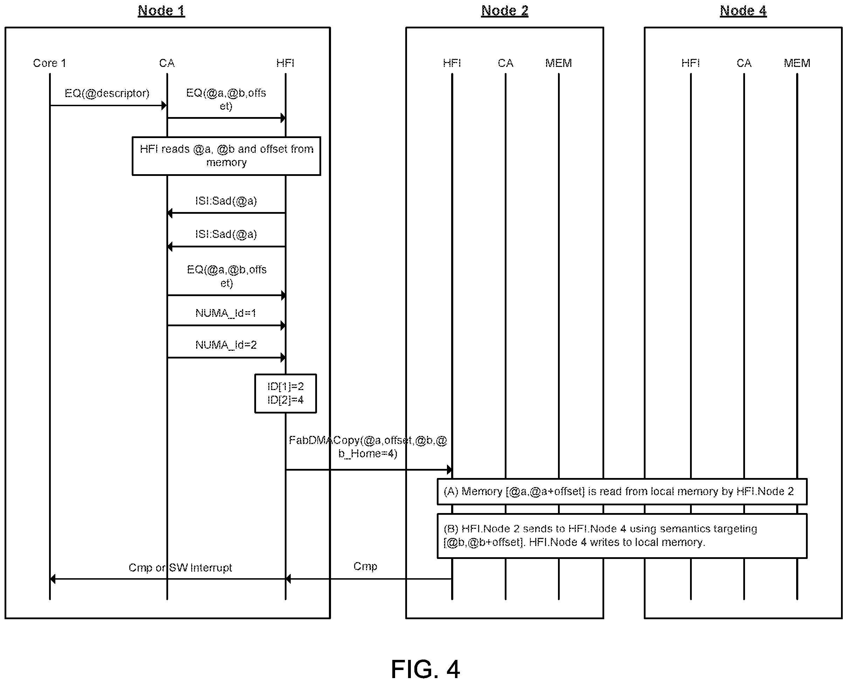

FIG. 4 illustrates an exemplary system for copying data between computing nodes. The computing nodes can reside in a non-uniform memory access (NUMA) data center. For example, the NUMA data center can include a first computing node (node 1), a second computing node (node 2) and a third computing node (node 4). Each computing node can include one or more processors (or cores), a caching agent (which includes a system address decoder), a host fabric interface (HFI) and/or memory. The HFI can also be referred to as a network interface controller. A given computing node (e.g., the first computing node) can initiate data copying between different computing nodes in the NUMA data center. Alternatively, data can be copied to different memory regions within a same computing node. As an example, the first computing device can initiate data copies from: the second computing node to the third computing node, the third computing node to the second computing node, the first computing node to the second/third computing nodes, and/or the second/third computing nodes to the first computing node.

As shown in FIG. 4, a processor (or core) on the first computing node can execute an instruction that triggers a notification to be sent to an HFI of the first computing node. The notification can indicate a new command that is requested by an application being executed on the first computing node. The notification indicating the new command can be sent from the processor to the HFI via a system address decoder in a caching agent (CA). The command can include a descriptor that points to a payload. The HFI can read the payload from a local memory based on the descriptor. More specifically, the HFI can extract a first address @a, a second address @b and an offset value from the payload.

As described below, the HFI can use the first address @a, the second address @b and the offset value to perform a data copy between computing nodes. The first address @a can be referred to as a source address and the second address @b can be referred to as a target address. A first memory region and a second memory region can be defined by [@a, @a+offset] and [@b, @b+offset], respectively. The first memory region can be referred to as a source memory region and the second memory region can be referred to as a target memory region.

In one example, the HFI in the first computing node can send commands to the system address decoder in the CA to discover a NUMA domain associated with each of the first address @a and the second address @b. For example, the HFI can send a first command that indicates the first address @a, as well as a second command that indicates that second address @b. In response, the system address decoder can send the NUMA domain IDs associated with each of the first address @a and the second address @b. For example, for the first address @a, the system address decoder can indicate that the corresponding NUMA domain ID is 1. In addition, for the second address @b, the system address decoder can indicate that the corresponding NUMA domain ID is 2.

As previously described (with respect to FIG. 2), the system address decoder can maintain a mapping between a memory address space and physical memory hosted in a plurality of computing nodes in the NUMA data center. In other words, the system address decoder can know that the first address @a corresponds to a first memory region in a first NUMA domain, and the first NUMA domain belongs to memory hosted by a first computing node. Similarly, the system address decoder can know that the second address @b corresponds to a memory region in a second NUMA domain, and the second NUMA domain belongs to memory hosted by a second computing node.

In one example, in response to receiving from the HFI the first and second commands that indicate the first address @a and the second address @b, respectively, the system address decoder can generate a fault. The system address decoder can generate a fault when the first address @a and/or the second address @b correspond to a non-DRAM domain or are not mapped by the system address decoder. In another example, the system address decoder can generate the fault when the first memory region or the second memory region is not fully contained in one NUMA domain.

In one example, the HFI can identify computing nodes that correspond to the NUMA domain IDs. In other words, the HFI can identify the computing nodes with memory to which the NUMA domains belong to. The HFI can identify the computing nodes using a translation table. As previously described (with respect to FIG. 3), the translation table can map computing nodes in the NUMA data center to corresponding NUMA domain IDs. As an example, the HFI can determine via the system address decoder that the NUMA domain IDs are 1 and 2, and using the translation table, the HFI can determine that the corresponding computing nodes are the second computing node (node 2) and the third computing node (node 4), respectively.

In one example, the HFI of the first computing node can generate a new memory command (e.g., FabDMACopy) for transmission to the computing node that includes memory with the first address @a. In other words, the HFI can send the new memory command to the computing node that contains the source memory region. This computing node can be referred to as a source computing node. More specifically, the HFI of the first computing node can send the memory command to an HFI of the source computing node. The memory command (e.g., FabDMACopy) can instruct the source computing node to copy data from the source memory region [@a, @a+offset] to the target memory region [@b, @b+offset]. The target memory region can be contained in a target computing node.

In one example, the HFI of the source computing node can locally read data from the source memory region [@a, @a+offset], and the HFI of the source computing node can write the data to a corresponding memory region of the target computing node. More specifically, the HFI of the source computing node can send regular put semantics to an HFI of the target computing node, such that the HFI of the target computing node can write the data to the target memory region [@b, @b+offset]. The write to the target memory region [@b, @b+offset] can be performed using existing fabric put messages. In general, put messages can be used to send data from one computing node to another computing node. The put messages can include a destination, an address for the put and a payload (where the payload is the data being send). On the other hand, get messages can be used to fetch data from remote computing nodes. The get messages can include a destination, an address to read and a size of a payload to read.

In the example shown in FIG. 4, the HFI in the first computing node (node 1) can send the memory command (e.g., FabDMACopy) to the HFI of the second computing node (node 2). The memory command (e.g., FabDMACopy) can indicate the first address @a, the second address @b, the offset value, and an indication that the second address @b corresponds to memory in a third computing node (node 4). The HFI of the second computing node can receive the memory command (e.g., FabDMACopy) from the HFI of the first computing node. The HFI of the second computing node can read a memory region [@a, @a+offset] from local memory. The HFI of the second computing node (node 2) can send a memory region [@b, @b+offset] using regular put semantics to the HFI of the third computing node (node 4). The HFI of the third computing node (node 4) can write the data to [@b, @b+offset] in local memory as a regular put.

In one example, after the copy is completed, the HFI of the source computing node can send a completion indication or acknowledgement to the processor (or core) of the first computing node. For example, the HFI of the second computing node (node 2) can send the acknowledgement to the processor of the first computing node (node 1). The acknowledgement can be active (e.g., the processor waits for the completion indication or is notified by a software interrupt) or the acknowledgement can be passive (e.g., an application that is executing on the first computing node can periodically check if the data copy between memory regions is successfully performed).

In one configuration, the first computing node (node 1) can copy data from the first computing node (node 1) to the second computing node (node 2) or the third computing node (node 4). In this case, the HFI in the first computing node (node 1) can issue one of two different memory commands (e.g., FabDMACopy) - a command to copy data from the first computing node (node 1) to the second computing node (node 2), or a command to copy data from the first computing node (node 1) to the third computing node (node 4). Here, the HFI in the first computing node (node 1) can read data in a memory region in local memory, and then copy that data to a corresponding memory region in the second computing node (node 2) or the third computing node (node 4).

Similarly, the first computing node (node 1) can copy data from the second computing node (node 2) or the third computing node (node 4) to the first computing node (node 1). In this case, the HFI in the first computing node (node 1) can issue one of two different memory commands (e.g., FabDMACopy) - a command to copy data from the second computing node (node 2) to the first computing node (node 1), or a command to copy data from the third computing node (node 4) to the first computing node (node 1).

In one configuration, the first computing node (node 1) can read data in a first memory region [@a, @a+offset] and write the data to a second memory region [@b, @b+offset], wherein the first memory region and the second memory region are in the same computing node (e.g., node 4). In another example, the first computing node (node 1) can read data in a first memory region of the first computing node (node 1), and then write the data in a second memory region of the first computing node (node 1). In this example, the first computing node (node 1) both locally reads and writes the data since no other computing node is involved.

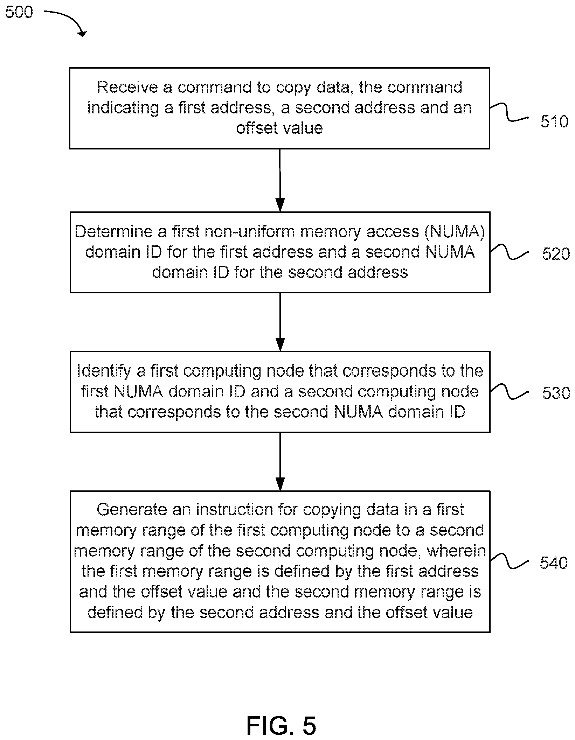

FIG. 5 illustrates exemplary functionality of an apparatus. The apparatus can comprise logic to: receive a command to copy data, the command indicating a first address, a second address and an offset value, as in block 510. The apparatus can comprise logic to: determine a first non-uniform memory access (NUMA) domain ID for the first address and a second NUMA domain ID for the second address, as in block 520. The apparatus can comprise logic to: identify a first computing node with memory that corresponds to the first NUMA domain ID and a second computing node with memory that corresponds to the second NUMA domain ID, as in block 530. The apparatus can comprise logic to: generate an instruction for copying data in a first memory range of the first computing node to a second memory range of the second computing node, wherein the first memory range is defined by the first address and the offset value and the second memory range is defined by the second address and the offset value, as in block 540.

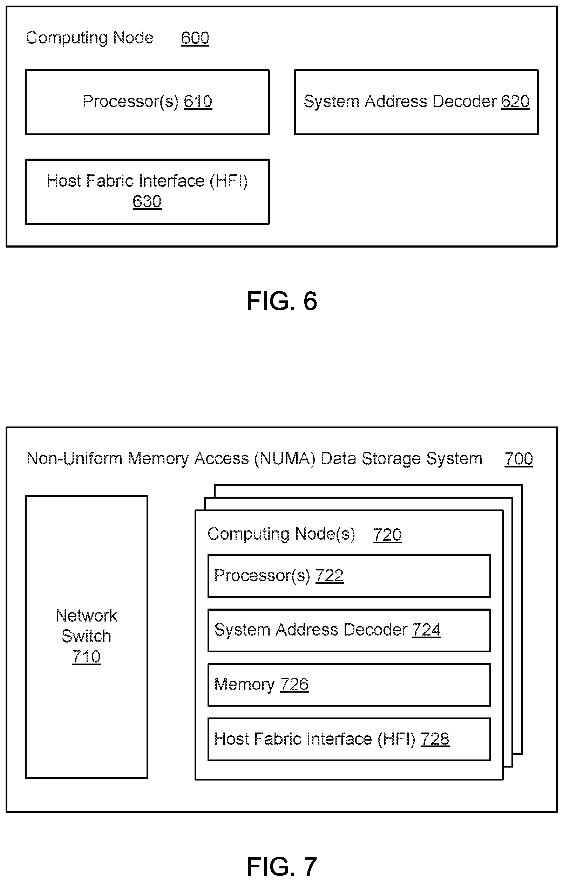

FIG. 6 illustrates an exemplary computing node 600. The computing node 600 can include one or more processors 610, a system address decoder 620, and a host fabric interface (HFI) 630. The HFI 630 can include logic to: receive, from the one or more processors 610, a command to copy data. The command can indicate a source address, a target address and an offset value. The HFI 630 can include logic to: determine, via the system address decoder 620, a source non-uniform memory access (NUMA) domain ID for the source address and a target NUMA domain ID for the target address. The HFI 630 can include logic to: identify a source computing node with memory that corresponds to the source NUMA domain ID and a target computing node with memory that corresponds to the target NUMA domain ID using a translation table. The HFI 630 can include logic to: generate a command for copying data in a source memory range of the source computing node to a target memory range of the target computing node. The source memory range can be defined by the source address and the offset value and the target memory range can be defined by the target address and the offset value.

FIG. 7 illustrates an exemplary non-uniform memory access (NUMA) data storage system 700. The NUMA data storage system 700 can include a network switch 710 and a plurality of computing nodes 720. Each computing node 720 in the plurality of computing nodes 720 can include: one or more processors 722, a system address decoder 724, memory 726 that is accessible to the plurality of computing nodes 720, and a host fabric interface (HFI) 728. The HFI 728 can be configured to copy data between computing nodes 720 of the NUMA data storage system 700 via the network switch 710 and without participation of the one or more processors 722.

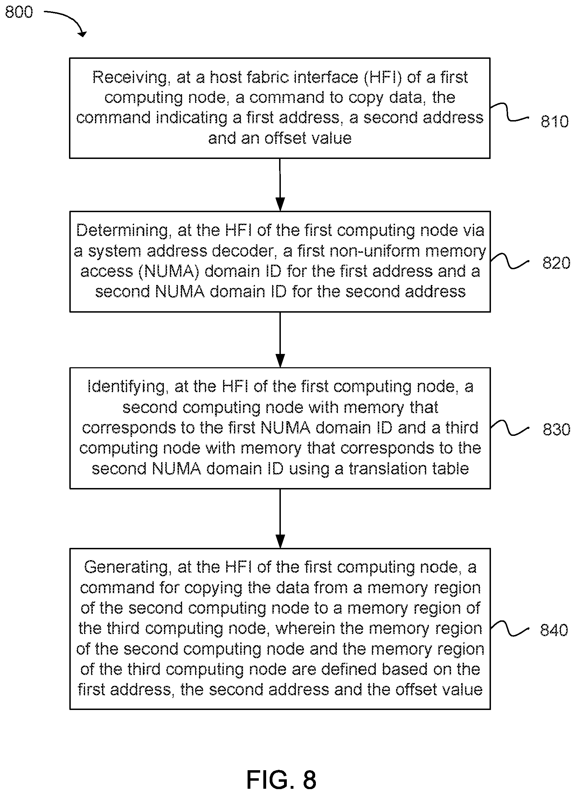

Another example provides a method 800 for copying data between computing nodes, as shown in the flow chart in FIG. 8. The method can be executed as instructions on a machine, where the instructions are included on at least one computer readable medium or one non-transitory machine readable storage medium. The method can include the operation of: receiving, at a host fabric interface (HFI) of a first computing node, a command to copy data, the command indicating a first address, a second address and an offset value, as in block 810. The method can include the operation of: determining, at the HFI of the first computing node via a system address decoder, a first non-uniform memory access (NUMA) domain ID for the first address and a second NUMA domain ID for the second address, as in block 820. The method can include the operation of: identifying, at the HFI of the first computing node, a second computing node with memory that corresponds to the first NUMA domain ID and a third computing node with memory that corresponds to the second NUMA domain ID using a translation table, as in block 830. The method can include the operation of: generating, at the HFI of the first computing node, a command for copying the data from a memory region of the second computing node to a memory region of the third computing node, wherein the memory region of the second computing node and the memory region of the third computing node are defined based on the first address, the second address and the offset value, as in block 840.

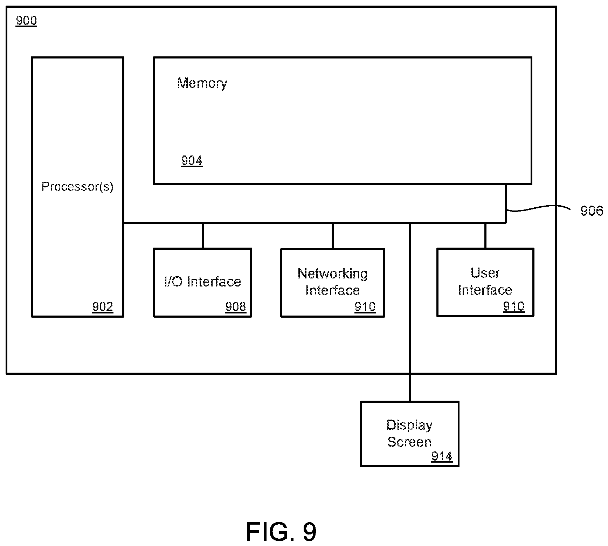

FIG. 9 illustrates a general computing system or device 900 that can be employed in the present technology. The computing system 900 can include a processor 902 in communication with a memory 904. The memory 904 can include any device, combination of devices, circuitry, and the like that is capable of storing, accessing, organizing and/or retrieving data. Non-limiting examples include SANs (Storage Area Network), cloud storage networks, volatile or non-volatile RAM, phase change memory, optical media, hard-drive type media, and the like, including combinations thereof.

The computing system or device 900 additionally includes a local communication interface 906 for connectivity between the various components of the system. For example, the local communication interface 906 can be a local data bus and/or any related address or control busses as may be desired.

The computing system or device 900 can also include an I/O (input/output) interface 908 for controlling the I/O functions of the system, as well as for I/O connectivity to devices outside of the computing system 900. A network interface 910 can also be included for network connectivity. The network interface 910 can control network communications both within the system and outside of the system. The network interface can include a wired interface, a wireless interface, a Bluetooth interface, optical interface, and the like, including appropriate combinations thereof. Furthermore, the computing system 900 can additionally include a user interface 912, a display device 914, as well as various other components that would be beneficial for such a system.

The processor 902 can be a single or multiple processors, and the memory 904 can be a single or multiple memories. The local communication interface 906 can be used as a pathway to facilitate communication between any of a single processor, multiple processors, a single memory, multiple memories, the various interfaces, and the like, in any useful combination.

Although not depicted, any system can include and use a power supply such as but not limited to a battery, AC-DC converter at least to receive alternating current and supply direct current, renewable energy source (e.g., solar power or motion based power), or the like.

Various techniques, or certain aspects or portions thereof, can take the form of program code (i.e., instructions) embodied in tangible media, such as floppy diskettes, CD-ROMs, hard drives, non-transitory computer readable storage medium, or any other machine-readable storage medium wherein, when the program code is loaded into and executed by a machine, such as a computer, the machine becomes an apparatus for practicing the various techniques. Circuitry can include hardware, firmware, program code, executable code, computer instructions, and/or software. A non-transitory computer readable storage medium can be a computer readable storage medium that does not include signal. In the case of program code execution on programmable computers, the computing device can include a processor, a storage medium readable by the processor (including volatile and non-volatile memory and/or storage elements), at least one input device, and at least one output device. The volatile and non-volatile memory and/or storage elements can be a RAM, EPROM, flash drive, optical drive, magnetic hard drive, solid state drive, or other medium for storing electronic data. The node and wireless device can also include a transceiver module, a counter module, a processing module, and/or a clock module or timer module. One or more programs that can implement or utilize the various techniques described herein can use an application programming interface (API), reusable controls, and the like. Such programs can be implemented in a high level procedural or object oriented programming language to communicate with a computer system. However, the program(s) can be implemented in assembly or machine language, if desired. In any case, the language can be a compiled or interpreted language, and combined with hardware implementations. Exemplary systems or devices can include without limitation, laptop computers, tablet computers, desktop computers, smart phones, computer terminals and servers, storage databases, and other electronics which utilize circuitry and programmable memory, such as household appliances, smart televisions, digital video disc (DVD) players, heating, ventilating, and air conditioning (HVAC) controllers, light switches, and the like.

## Claims

1. A computing node, comprising:
one or more processors;
a system address decoder; and
a host fabric interface, HFI, comprising logic configured to:
receive, from the one or more processors, a command to copy data, the command indicating a source address, a target address and an offset value;
determine, via the system address decoder, a source non-uniform memory access, NUMA, domain ID for the source address and a target NUMA domain ID for the target address;
identify a source computing node, coupled to the computing node, with memory that corresponds to the source NUMA domain ID and a target computing node, coupled to the computing node, with memory that corresponds to the target NUMA domain ID using a translation table; and
generate a command for copying data in a source memory range of the source computing node to a target memory range of the target computing node, wherein the source memory range is defined by the source address and the offset value and the target memory range is defined by the target address and the offset value,
wherein the HFI further comprises logic to: transmit the command to the source computing node, wherein the source computing node is configured to read the data in the source memory range and write the data to the target memory range of the target computing node, and
wherein the one or more processors are not used to copy the data from the source memory range of the source computing node to the target memory range of the target computing node.

2. The computing node of claim 1, wherein the command includes a descriptor that points to a memory payload, wherein the HFI is configured to extract the source address, the target address and the offset value from the memory payload.

3. The computing node of claim 1, wherein the HFI further comprises logic to:
send, to the system address decoder, a discovery command that includes the source address and the target address; and
receive, from the system address decoder, an error message when at least one of the source address and the target address are not mapped to a corresponding computing node at the system address decoder.

4. The computing node of claim 1, wherein the HFI further comprises logic to:
send, to the system address decoder, a discovery command that includes the source address and the target address; and
receive, from the system address decoder, an error message when at least one of the source address plus the data offset or the target address plus the data offset is not fully contained in one NUMA domain.

5. The computing node of claim 1, wherein the one or more processors further comprise logic to: receive an acknowledgement after the data in the source memory range of the source computing node is copied to the target memory range of the target computing node.

6. The computing node of claim 1, wherein the computing node is one of a plurality of computing nodes included in a NUMA data center.

7. The computing node of claim 1, further comprising one or more of:
a display communicatively coupled to the one or more processors;
a network interface communicatively coupled to the one or more processors; or
a power source coupled to the one or more processors.

8. A non-uniform memory access, NUMA, data storage system, comprising:
a network switch; and
a plurality of computing nodes according to any preceding claim.

9. The NUMA data storage system of claim 8, wherein the computing nodes are associated with defined physical locations.

10. The NUMA data storage system of claim 8, wherein the memory includes at least one of: a hard disk drive, HDD, a solid-state drive, SSD, a redundant array of independent disks, RAID, volume, a non-volatile dual in-line memory module, NVDIMM, network attached storage, phase change memory, PCM, or non-volatile memory, NVM, wherein the NVM includes NAND memory and a three dimensional cross point, 3D XPoint, memory.

11. A method for copying data between computing nodes, the method comprising:
receiving, at a host fabric interface, HFI, of a first computing node comprising one or more processors, a command to copy data, the command indicating a first address, a second address and an offset value;
determining, at the HFI of the first computing node via a system address decoder, a first non-uniform memory access, NUMA, domain ID for the first address and a second NUMA domain ID for the second address;
identifying, at the HFI of the first computing node, a second computing node, coupled to the first computing node, with memory that corresponds to the first NUMA domain ID and a third computing node, coupled to the first computing node, with memory that corresponds to the second NUMA domain ID using a translation table;
generating, at the HFI of the first computing node, a command for copying the data from a memory region of the second computing node to a memory region of the third computing node, wherein the memory region of the second computing node and the memory region of the third computing node are defined based on the first address, the second address and the offset value;
transmitting the command from the HFI of the first computing node to the second computing node, wherein the second computing node is configured to read the data from the memory region of the second computing node and write the data to the memory region of the third computing node,
wherein the one or more processors are not used to copy the data from the memory range of the second computing node to the memory range of the third computing node.

## Patentansprüche

1. Rechenknoten, umfassend:
einen oder mehrere Prozessoren;
einen Systemadressendecoder; und
eine Host-Fabric-Schnittstelle, HFI, die eine Logik umfasst, die dazu ausgelegt ist:
von dem einen oder mehreren Prozessoren einen Befehl zum Kopieren von Daten zu empfangen, wobei der Befehl eine Quelladresse, eine Zieladresse und einen Offset-Wert angibt;
über den Systemadressendecoder eine Quell-NUMA-Domänen-ID (NUMA = "Non-Uniform Memory Access") für die Quelladresse und eine Ziel-NUMA-Domänen-ID für die Zieladresse zu bestimmen;
einen mit dem Rechenknoten gekoppelten QuellRechenknoten mit Speicher, der der Quell-NUMA-Domänen-ID entspricht, und einen mit dem Rechenknoten gekoppelten Ziel-Rechenknoten mit Speicher, der der Ziel-NUMA-Domänen-ID entspricht, unter Verwendung einer Übersetzungstabelle zu identifizieren; und
einen Befehl zum Kopieren von Daten in einem Quellspeicherbereich des Quellrechenknotens in einen Zielspeicherbereich des Zielrechenknotens zu erzeugen,
wobei der Quellspeicherbereich durch die Quelladresse und den Offset-Wert definiert ist und der Zielspeicherbereich durch die Zieladresse und den Offset-Wert definiert ist,
wobei die HFI ferner eine Logik umfasst, um: den Befehl an den Quellrechenknoten zu übertragen, wobei der Quellrechenknoten dazu ausgelegt ist, die Daten in dem Quellspeicherbereich zu lesen und die Daten in den Zielspeicherbereich des Zielrechenknotens zu schreiben, und
wobei der eine oder mehrere Prozessoren nicht zum Kopieren der Daten aus dem Quellspeicherbereich des Quellrechenknotens in den Zielspeicherbereich des Zielrechenknotens verwendet werden.

2. Rechenknoten nach Anspruch 1, wobei der Befehl einen Deskriptor beinhaltet, der auf eine Speichernutzlast hinweist, wobei die HFI dazu ausgelegt ist, die Quelladresse, die Zieladresse und den Offset-Wert aus der Speichernutzlast zu extrahieren.

3. Rechenknoten nach Anspruch 1, wobei die HFI ferner eine Logik umfasst, um:
an den Systemadressendecoder einen Discovery-Befehl zu senden, der die Quelladresse und die Zieladresse beinhaltet; und
von dem Systemadressendecoder eine Fehlermeldung zu empfangen, wenn die Quelladresse und/oder die Zieladresse nicht auf einen entsprechenden Rechenknoten bei dem Systemadressendecoder gemappt ist.

4. Rechenknoten nach Anspruch 1, wobei die HFI ferner eine Logik umfasst, um:
an den Systemadressendecoder einen Discovery-Befehl zu senden, der die Quelladresse und die Zieladresse beinhaltet; und
von dem Systemadressendecoder eine Fehlermeldung zu empfangen, wenn die Quelladresse plus der Datenoffset und/oder die Zieladresse plus der Datenoffset nicht vollständig in einer NUMA-Domäne enthalten ist.

5. Rechenknoten nach Anspruch 1, wobei der eine oder mehrere Prozessoren ferner eine Logik umfassen, um:
eine Bestätigung zu empfangen, nachdem die Daten im Quellspeicherbereich des Quellrechenknotens in den Zielspeicherbereich des Zielrechenknotens kopiert worden sind.

6. Rechenknoten nach Anspruch 1, wobei der Rechenknoten einer von mehreren Rechenknoten ist, die in einem NUMA-Rechenzentrum beinhaltet sind.

7. Rechenknoten nach Anspruch 1, ferner umfassend:
eine Anzeige, die kommunikativ mit einem oder mehreren Prozessoren gekoppelt ist; und/oder
eine Netzwerkschnittstelle, die kommunikativ mit einem oder mehreren Prozessoren gekoppelt ist; und/oder eine Stromquelle, die kommunikativ mit einem oder
mehreren Prozessoren gekoppelt ist.

8. NUMA-Datenspeichersystem (NUMA = "Non-Uniform Memory Access"), umfassend:
einen Netzwerkschalter; und
mehrere Rechenknoten nach einem der vorhergehenden Ansprüche.

9. NUMA-Datenspeichersystem nach Anspruch 8, wobei die Rechenknoten definierten physikalischen Positionen zugeordnet sind.

10. NUMA-Datenspeichersystem nach Anspruch 8, wobei der Speicher beinhaltet: ein Festplattenlaufwerk, HDD, und/oder ein Solid-State-Laufwerk, SSD, und/oder ein Volumen eines redundanten Arrays unabhängiger Festplatten, RAID, und/oder einen netzgebundenen Speicher eines nicht flüchtigen Dual-Inline-Speichermoduls, NVDIMM, und/oder einen Phasenänderungsspeicher, PCM, und/oder einen nicht flüchtigen Speicher, NVM, wobei der NVM einen NAND-Speicher und einen dreidimensionalen Kreuzungspunkt-, 3D XPoint-, Speicher beinhaltet.

11. Verfahren zum Kopieren von Daten zwischen Rechenknoten, wobei das Verfahren umfasst:
Empfangen eines Befehls zum Kopieren von Daten an einer Host-Fabric-Schnittstelle, HFI, eines ersten Rechnerknotens, der einen oder mehrere Prozessoren umfasst, wobei der Befehl eine erste Adresse, eine zweite Adresse und einen Offset-Wert angibt;
Bestimmen einer ersten NUMA-Domänen-ID (NUMA = "Non-Uniform Memory Access") für die erste Adresse und einer zweiten NUMA-Domänen-ID für die zweite Adresse in der HFI des ersten Rechenknotens über einen Systemadressdecoder;
Identifizieren, an der HFI des ersten Rechenknotens, eines zweiten Rechenknotens, der mit dem ersten Rechenknoten gekoppelt ist, mit einem Speicher, der der ersten NUMA-Domänen-ID entspricht, und eines dritten Rechenknotens, der mit dem ersten Rechenknoten gekoppelt ist, mit einem Speicher, der der zweiten NUMA-Domänen-ID entspricht, unter Verwendung einer Übersetzungstabelle;
Erzeugen eines Befehls in der HFI des ersten Rechenknotens zum Kopieren der Daten aus einem Speicherbereich des zweiten Rechenknotens in einen Speicherbereich des dritten Rechenknotens, wobei der Speicherbereich des zweiten Rechenknotens und der Speicherbereich des dritten Rechenknotens basierend auf der ersten Adresse, der zweiten Adresse und dem Offset-Wert definiert sind;
Übertragen des Befehls von der HFI des ersten Rechenknotens an den zweiten Rechenknoten, wobei der zweite Rechenknoten dazu ausgelegt ist, die Daten aus dem Speicherbereich des zweiten Rechenknotens zu lesen und die Daten in den Speicherbereich des dritten Rechenknotens zu schreiben,
wobei der eine oder mehrere Prozessoren nicht zum Kopieren der Daten aus dem Speicherbereich des zweiten Rechenknotens in den Speicherbereich des dritten Rechenknotens verwendet werden.

## Revendications

1. Nœud informatique, comprenant :
un ou plusieurs processeurs ;
un décodeur d'adresses de système ; et
une interface de matrice hôte, HFI, comprenant une logique configurée pour :
recevoir, en provenance de l'un ou des plusieurs processeurs, une commande de copier des données, la commande indiquant une adresse source, une adresse cible et une valeur de décalage ;
déterminer, par l'intermédiaire du décodeur d'adresses de système, un identifiant de domaine d'accès à la mémoire non uniforme, NUMA, source pour l'adresse source et un identifiant de domaine NUMA cible pour l'adresse cible ;
identifier un nœud informatique source, couplé au nœud informatique, avec une mémoire qui correspond à l'identifiant de domaine NUMA source et un nœud informatique cible, couplé au nœud informatique, avec une mémoire qui correspond à l'identifiant de domaine NUMA cible en utilisant une table de traduction ; et
générer une commande pour copier des données dans une plage de mémoire source du nœud informatique source vers une plage de mémoire cible du nœud informatique cible, la plage de mémoire source étant définie par l'adresse source et la valeur de décalage, et la plage de mémoire cible étant définie par l'adresse cible et la valeur de décalage,
dans lequel la HFI comprend en outre une logique pour :
transmettre la commande au nœud informatique source, le nœud informatique source étant configuré pour lire les données dans la plage de mémoire source et écrire les données sur la plage de mémoire cible du nœud informatique cible, et
dans lequel le ou les plusieurs processeurs ne sont pas utilisés pour copier les données de la plage de mémoire source du nœud informatique source vers la plage de mémoire cible du nœud informatique cible.

2. Nœud informatique selon la revendication 1, dans lequel la commande inclut un descripteur qui pointe vers une charge utile de mémoire, la HFI étant configurée pour extraire l'adresse source, l'adresse cible et la valeur de décalage de la charge utile de mémoire.

3. Nœud informatique selon la revendication 1, dans lequel la HFI comprend en outre une logique pour :
envoyer, au décodeur d'adresses de système, une commande de découverte qui inclut l'adresse source et l'adresse cible ; et
recevoir, du décodeur d'adresses de système, un message d'erreur lorsqu'au moins une de l'adresse source et de l'adresse cible ne sont pas mappées vers un nœud informatique correspondant au niveau du décodeur d'adresses de système.

4. Nœud informatique selon la revendication 1, dans lequel la HFI comprend en outre une logique pour :
envoyer, au décodeur d'adresses de système, une commande de découverte qui inclut l'adresse source et l'adresse cible ; et
recevoir, du décodeur d'adresses de système, un message d'erreur lorsqu'au moins une de l'adresse source plus le décalage de données ou de l'adresse cible plus le décalage de données n'est pas complètement contenue dans un domaine NUMA.

5. Nœud informatique selon la revendication 1, dans lequel le ou les plusieurs processeurs comprennent en outre une logique pour: recevoir un accusé de réception après que les données dans la plage de mémoire source du nœud informatique source sont copiées sur la plage de mémoire cible du nœud informatique cible.

6. Nœud informatique selon la revendication 1, dans lequel le nœud informatique est l'un d'une pluralité de nœuds informatiques inclus dans un centre de données NUMA.

7. Nœud informatique selon la revendication 1, comprenant en outre un ou plusieurs éléments parmi :
un dispositif d'affichage couplé de manière communicative à l'un ou aux plusieurs processeurs ;
une interface réseau couplée de manière communicative à l'un ou aux plusieurs processeurs ; ou
une source de puissance couplée à l'un ou aux plusieurs processeurs.

8. Système de stockage de données d'accès à la mémoire non uniforme, NUMA, comprenant :
un commutateur de réseau ; et
une pluralité de nœuds informatiques selon l'une quelconque des revendications précédentes.

9. Système de stockage de données NUMA selon la revendication 8, dans lequel les nœuds informatiques sont associés à des emplacements physiques définis.

10. Système de stockage de données NUMA selon la revendication 8, dans lequel la mémoire inclut au moins un élément parmi : un lecteur de disque dur, HDD, un lecteur à semi-conducteurs, SSD, un volume d'un ensemble redondant de disques indépendants, RAID, un module de mémoire en ligne double non volatile, NVDIMM, un dispositif de stockage fixé à un réseau, une mémoire à changement de phase, PCM, ou une mémoire non volatile, NVM, la NVM incluant une mémoire NAND et une mémoire à point croisé tridimensionnelle, XPoint 3D.

11. Procédé permettant de copier des données entre des nœuds informatiques, le procédé comprenant :
la réception, au niveau d'une interface de matrice hôte, HFI, d'un premier nœud informatique comprenant un ou plusieurs processeurs, une commande de copier des données, la commande indiquant une première adresse, une seconde adresse et une valeur de décalage ;
la détermination, au niveau de la HFI du premier nœud informatique par l'intermédiaire d'un décodeur d'adresses de système, d'un premier identifiant de domaine d'accès à la mémoire non uniforme, NUMA, pour la première adresse et d'un deuxième identifiant de domaine NUMA pour la deuxième adresse ;
l'identification, au niveau de la HFI du premier nœud informatique, d'un deuxième nœud informatique, couplé au premier nœud informatique, avec une mémoire qui correspond au premier identifiant de domaine NUMA et d'un troisième nœud informatique, couplé au premier nœud informatique, avec une mémoire qui correspond au deuxième identifiant de domaine NUMA en utilisant une table de traduction ;
la génération, au niveau de la HFI du premier nœud informatique, d'une commande de copier les données d'une région de mémoire du deuxième nœud informatique à une région de mémoire du troisième nœud informatique, la région de mémoire du deuxième nœud informatique et la région de mémoire du troisième nœud informatique étant définies sur la base de la première adresse, de la seconde adresse et de la valeur de décalage ;
la transmission de la commande de la HFI du premier nœud informatique au deuxième nœud informatique, le deuxième nœud informatique étant configuré pour lire les données de la région de mémoire du deuxième nœud informatique et écrire les données sur la région de mémoire du troisième nœud informatique,
dans lequel le ou les plusieurs processeurs ne sont pas utilisés pour copier les données de la plage de mémoire du deuxième nœud informatique source vers la plage de mémoire cible du troisième nœud informatique.
